# EUROPEAN PATENT APPLICATION

(11) **EP 3 104 322 A1**
(43) Date of publication of application: **14.12.2016**
(21) Application number: 15747062.6
(22) Date of filing: 05.02.2015
(51) Int. Cl.: G06Q 30/02, G06F 21/30, G06F 21/64, G06Q 30/06

(54) **AUTHENTICATION PROCESSING SYSTEM AND AUTHENTICATION PROCESSING SERVER**

(30) Priority: 05.02.2014 JP 2014019993
(71) Applicant: Gurunavi, Inc., Tokyo 100-0006 (JP)
(72) Inventor: KOKI, Shinji, Tokyo 100-0006 (JP)
(74) Representative: Kuhnen & Wacker
(86) International application number: PCT/JP2015/053253
(87) International publication number: WO 2015/119200

(57) **Abstract**

There are provided an authentication processing system and an authentication processing server for authenticating a screen when using various facilities, such as restaurants. The authentication processing system includes a portable communication terminal and an authentication processing server. The authentication processing server includes: a code table generation processing unit that generates a code table including a plurality of first codes and a second code, which is associated with each of the plurality of first codes for each time period; a code table storage unit that stores the code table generated by the code table generation processing unit; a clock processing unit having a clock function; and a user processing unit that receives a first code from a portable communication terminal, specifies a second code corresponding to the first code from the code table based on date and time information in the clock processing unit, and transmits the specified second code to the portable communication terminal. The portable communication terminal includes a display unit that displays a screen, which is to be presented to an employee of the facility, based on the second code received from the authentication processing server.

## Description

### BACKGROUND OF THE INVENTION

### 1. Field of the Invention

The present invention relates to an authentication processing system and an authentication processing server for authenticating a screen presented to a clerk or the like when using various facilities, such as restaurants.

### 2. Description of Related Art

With the spread of portable communication terminals, such as mobiles phones, storing an application program for a discount using a coupon, payment using points or electronic money, or the like in a portable communication terminal and using the application program when using various facilities, such as restaurants, have been performed.

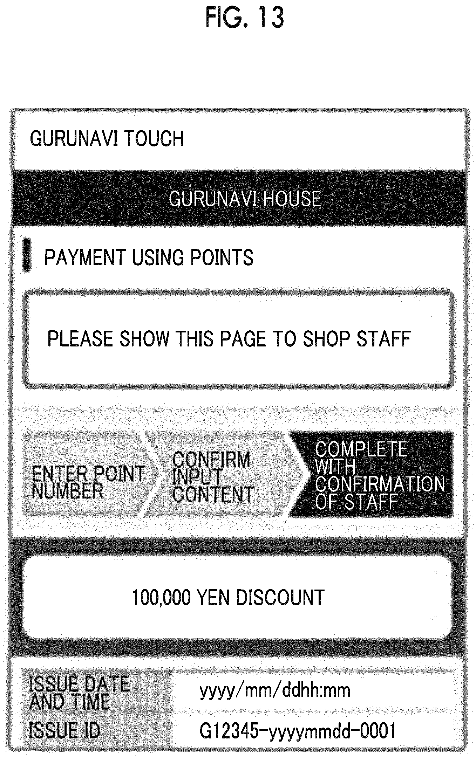

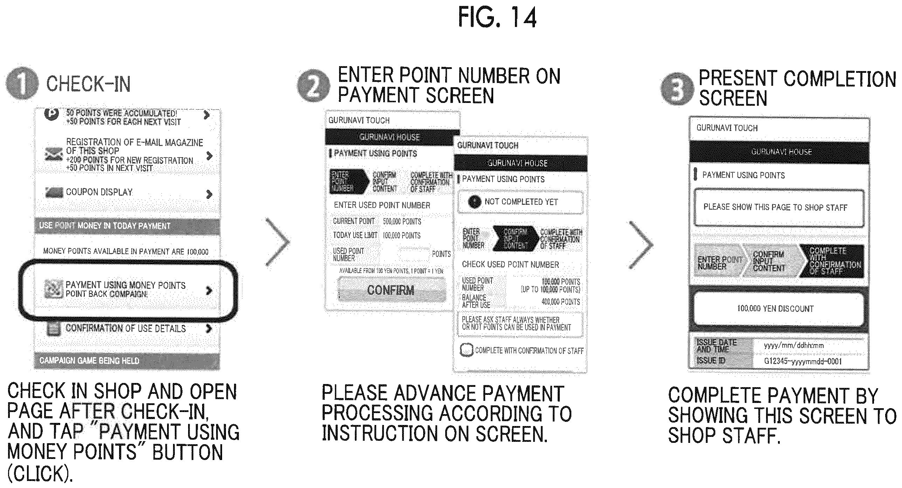

In this case, a user of each facility starts the application program in the portable communication terminal, and accesses a predetermined server through the application program to perform an operation. Then, the user proves that payment or the like has been completed by presenting a screen (payment completion screen) (FIG. 13), which shows that payment using points, electronic money, or the like has been completed, to a clerk at the time of payment in the facility, so that the discount or payment can be made. FIG. 14 shows the flow of such processing (refer to to PTL 1).

### Citation List

### Non-Patent Literature

[NPL 1] Gurunavi, Inc. "Gurunavi Touch Using Point Money for payment", the Internet <URL:http://www.gnavi.co.jp/touch/guide/pointuse/index.html>

### SUMMARY OF THE INVENTION

In the case of performing payment or the like by accessing a payment server for performing predetermined payment from a portable communication terminal, there is no interaction between the portable communication terminal and a facility side device, and only a payment completion screen showing a result of processing between the payment server and the portable communication terminal is presented to a clerk. For this reason, some users may try to have the benefit illegally by creating the same screen as the payment completion screen in advance as image information and pretending that the payment has been successfully completed by presenting the created image information to the clerk at the time of payment in the facility even though the payment has not been completed.

In this case, in order to check whether or not the payment completion screen is a correct one, it is recommended to record the issue date and time and the ID displayed on the payment completion screen. However, this is not performed in practice, in many cases, due to the burden on the clerk. Therefore, there is a demand for an authentication processing system that prevents impersonation of a screen showing the completion of payment or the like without a burden on the clerk has been demanded.

It is an object of an authentication processing system and an authentication processing server described in this application to reduce the burden on a clerk and to allow whether or not a screen is a fake screen to be easily checked.

An authentication processing system is an authentication processing system that includes an authentication processing server and a portable communication terminal that is used by a user of a facility and that authenticates a screen presented to an employee of the facility by the user of the facility. The authentication processing server includes: a code table generation processing unit that generates a code table including a plurality of first codes and a second code, which is associated with each of the plurality of first codes for each time period; a code table storage unit that stores the code table generated by the code table generation processing unit; a clock processing unit having a clock function; and a user processing unit that receives the first code from the portable communication terminal, specifies the second code corresponding to the received first code from the code table stored in the code table storage unit based on date and time information in the clock processing unit, and transmits the specified second code to the portable communication terminal. The portable communication terminal includes a display unit that displays a screen, which is to be presented to the employee of the facility, based on the second code received from the authentication processing server.

With the authentication processing system and the authentication processing server described above, the employee (clerk or the like) of the facility can easily check whether or not the screen presented by the user of the facility is a fake screen.

In the authentication processing system described above, the portable communication terminal may further include an input unit for inputting the first code.

In the authentication processing system described above, the authentication processing server may further include a code table distribution processing unit that distributes the code table to a facility side terminal provided in the facility.

The authentication processing system described above may further include a facility side terminal provided in a facility. The facility side terminal may include a facility side storage unit that stores the code table distributed from the authentication processing server; a facility side clock processing unit having a clock function; and a display unit that specifies, from the code table stored in the facility side storage unit, the second code of a predetermined time period based on date and time information in the facility side clock processing unit and displays the specified second code.

By configuring the authentication processing system and the authentication processing server described above, the employee of the facility can quickly find the code presented by the user from the code table. This increases the speed of the checking work.

In the authentication processing system described above, the predetermined time period may include a current time period and time periods before and after the current time period.

By displaying not only the code of the corresponding time period but also the codes of time periods before and after the time period, processing for synchronization of time between the authentication processing system and the facility side terminal is not necessary. For example, it is assumed that "20:01:10" is shown in the authentication processing system and "19:59:20" is shown in the facility side terminal. Assuming that only the code of the time period corresponding to the current date and time information is displayed, the code of the time period before 20 o'clock from 19 o'clock is displayed on the facility side terminal even though the code of the time period before 21 o'clock from 20 o'clock is transmitted to the portable communication terminal of the user. Then, the employee of the facility determines that the codes do not match each other. In order to solve this problem, processing for synchronization of time between the authentication processing system and the facility side terminal is necessary. However, in order to perform the synchronization processing, systematic processing is required.

Therefore, by using the configuration of the authentication processing system and the authentication processing server described above, the employee can easily determine matching or mismatching of codes without the synchronization processing being provided.

In the authentication processing system described above, the authentication processing server may further include a code table output processing unit that outputs the code table as a code calendar and a code book. In the code calendar, a date and a page number may be associated with each other. In the code book, a time period and the second code may be associated with each other for each page.

In a case where the facility is a restaurant, no facility side terminal may be provided in many cases. Therefore, by generating a code table on a paper medium by using the invention, it is possible to obtain the same technical effects as in the facility side terminal.

In the authentication processing system described above, the code table generation processing unit may generate the code table such that the second code is different for each facility and each day.

It is preferable that the code is a random number. For this reason, a processing time for generating the code itself is required. Thus, a processing time is required for generating a different code table for each facility if all codes are generated from the beginning. Therefore, it is possible to generate a different code table for each facility by changing the date on which the generated code is to be used.

Even for the code table on a paper medium, a different code table may be generated for each facility. A processing time is required for generating a different code table for each facility if all codes are generated from the beginning. Therefore, it is preferable to generate a different code table for each facility by changing the correspondence relationship between the date of a code book and a page for each facility in the code calendar. In this manner, it is possible to generate a different code table for each facility without the processing time for this being required.

An authentication processing server is an authentication processing server for authenticating a screen presented to an employee of a facility by a user of the facility. The authentication processing server includes: a code table generation processing unit that generates a code table including a plurality of first codes and a second code, which is associated with each of the plurality of first codes for each predetermined time period; a code table storage unit that stores the code table generated by the code table generation processing unit; a clock processing unit having a clock function; and a user processing unit that receives a first code from a portable communication terminal used by the user, specifies a second code corresponding to the received first code from the code table stored in the code table storage unit based on date and time information in the clock processing unit, and transmits the specified second code to the portable communication terminal.

The authentication processing server described above may further include a code table distribution processing unit that distributes the code table to a facility side terminal provided in the facility.

The authentication processing server described above may further include a code table output processing unit that outputs the code table as a code calendar and a code book. In the code calendar, a date and a page number may be associated with each other. In the code book, a time period and the second code may be associated with each other for each page.

In the authentication processing server described above, the code table generation processing unit may generate the code table such that the second code is changed for each facility and each day.

By using the authentication processing system and the authentication processing server described above, it is possible to reduce the burden on a clerk and to easily determine whether or not the screen is a fake screen.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a conceptual diagram of an example of the system configuration of an authentication processing system;
FIG. 2 is a diagram schematically showing an example of the hardware configuration of a computer that realizes each of an authentication processing server, a portable communication terminal, and a facility side terminal that form the authentication processing system;
FIG. 3 is a diagram illustrating an example of the process of the authentication processing system;
FIG. 4 is a diagram schematically showing an example of a code table;
FIG. 5 is a diagram schematically showing an example of a code identification information input screen;
FIG. 6 is a diagram schematically showing an example of a code display screen;
FIG. 7 is a diagram schematically showing an example of a case where only codes of a corresponding time period and time periods before and after the time period are displayed on a facility side terminal;
FIG. 8 is a diagram schematically showing an example of a screen displayed on a display unit of the facility side terminal.
FIG. 9 is a diagram schematically showing an example of another screen displayed on the display unit of the facility side terminal;
FIG. 10 is a diagram schematically showing an example of a code table on a paper medium;
FIG. 11 is a conceptual diagram of an example of an authentication processing system used in a second embodiment;
FIG. 12 is a diagram illustrating an example of the process of the authentication processing system;
FIG. 13 is a diagram showing a conventional example of a payment completion screen; and
FIG. 14 is a diagram schematically showing an example of the flow of the conventional payment processing.

### DETAILED DESCRIPTION OF EMBODIMENTS

Hereinafter, an authentication processing system and an authentication processing server will be described with reference to the diagrams. However, it should be noted that the technical scope of this application is not limited to these embodiments and inventions defined by the appended claims and their equivalents are also included therein.

### [First embodiment]

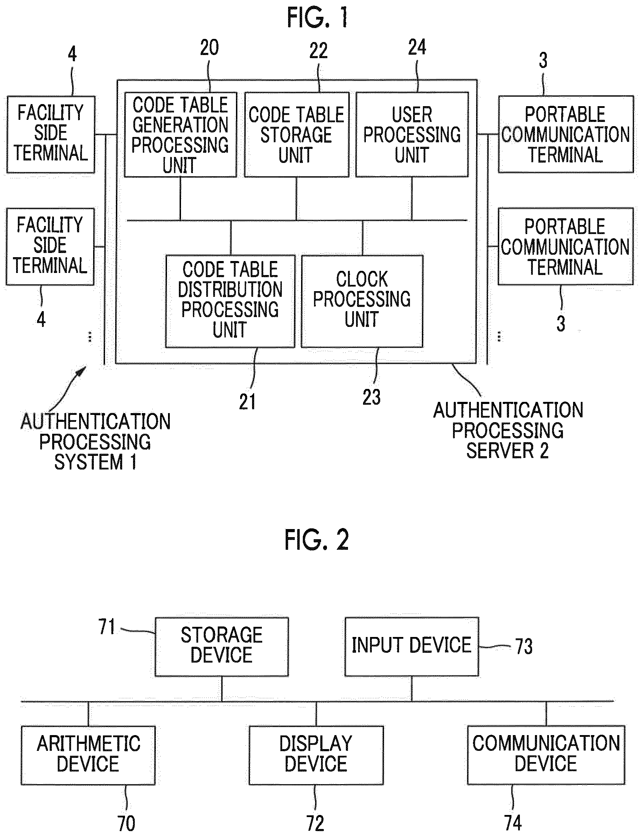

FIG. 1 shows a conceptual diagram of an example of the system configuration of an authentication processing system 1. FIG. 2 schematically shows an example of the hardware configuration of a computer that realizes each of an authentication processing server 2, a portable communication terminal 3, and a facility side terminal 4 that form the authentication processing system 1.

The computer includes an arithmetic device 70, a storage device 71, a display device 72, an input device 73, and a communication device 74. The arithmetic device 70 is, for example, a CPU that executes arithmetic processing of a program. The storage device 71 is, for example, a RAM or a ROM that stores information. The display device 72 is, for example, a display. The input device 73 is various input interfaces, such as a mouse, a keyboard, or a touch panel. The communication device 74 transmits and receives a processing result of the arithmetic device 70 or information stored in the storage device 71 through a network, such as a public telephone line, the Internet, or a LAN, for example. For each function (each means) realized on a computer, means (a program, a module, or the like) for executing the processing is read into the arithmetic device 70, so that the processing is executed. In the case of using information stored in the storage device 71 in the processing of each function, appropriate information is read from the storage device 71, and the read information is appropriately used in the processing of the arithmetic device 70. The function of each means described above is only logically distinguished, and may form the same region physically or practically.

As a computer, not only portable communication terminals, such as mobile phones including a smartphone, a PHS, a PDA, a tablet type computer, and a notebook computer, but also a personal computer, a server, and the like are included.

The authentication processing server 2 is a server that has at least the hardware configuration shown in FIG. 2 and is provided by a company that uses the authentication processing system 1. The authentication processing server 2 includes a code table generation processing unit 20, a code table distribution processing unit 21, a code table storage unit 22, a clock processing unit 23, a user processing unit 24, and the like. The authentication processing server 2 may be integrated with a payment server to be described later, or may be configured separately from the payment server.

The code table generation processing unit 20 generates an electronic code table, which is used in the facility side terminal 4 provided in each facility, at a predetermined timing, for example, every date and time set in each month. The code table is, for example, a random number table in which random numbers are written for each day and each time period in the case of generating the code table every month.

The portable communication terminal 3 has at least the hardware configuration shown in FIG. 2, and is a portable communication terminal (computer), such as a mobile phone, a smartphone, a PHS, a PDA, a tablet type computer, and a notebook computer that is used by users in facilities.

The facility side terminal 4 is a communication terminal that has at least the hardware configuration shown in FIG. 2 and is provided in facilities, and is a personal computer, a tablet type computer, or the like. Transmission and reception between the authentication processing server 2 and the facility side terminal 4 are performed through a network, such as the Internet. The facility side terminal 4 includes a facility side clock processing unit having a clock function.

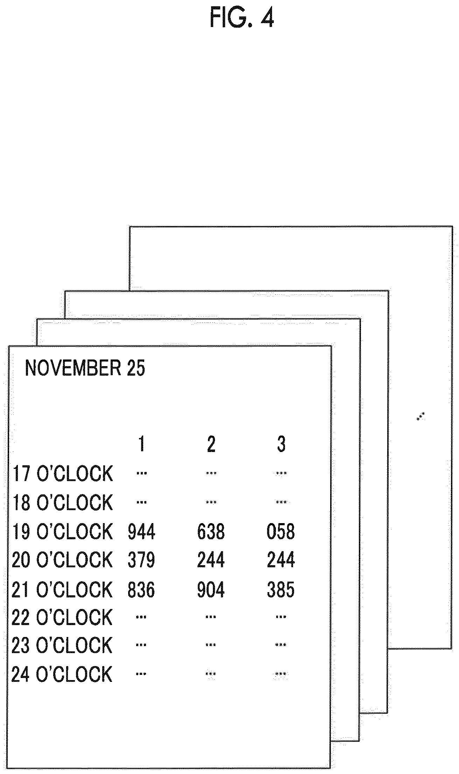

FIG. 4 is a diagram showing an example of the code table. As shown in FIG. 4, a code (random number) (second code) corresponding to each of three pieces of code identification information (first code) used in each time period on a particular date is included in the code table. Although a case of every hour is illustrated as the time period, arbitrary division, for example, every three hours, the time period of morning, or the time period of afternoon is possible without being limited thereto.

A period at which the code table generation processing unit 20 generates a code table may be any timing, such as every month, every week, every day, or every time. A code table to be generated may be commonly used in a plurality of facilities, or different code tables may be used in a plurality of facilities. Various known generation methods can be used for processing for generating random numbers included in the code table. In the case of using different codes in respective facilities, a code to be used may be changed by date in each facility. For example, a code used in November 25 in a store A is used in November 30 in a store B. Accordingly, even if the code itself is the same, dates on which the code is used are different. For this reason, codes used in restaurants are different. In addition, since code numbers to be generated do not change, no load is applied to the code table generation processing unit 20.

The code table distribution processing unit 21 distributes the code table generated by the code table generation processing unit 20 to each facility side terminal 4, and the code table storage unit 22 stores the code table stored in the code table generation processing unit 20. The clock processing unit 23 has a clock function. Preferably, the clock processing unit 23 manages date and time information.

When the input of predetermined code identification information is received from the portable communication terminal 3 that is used by a user, the user processing unit 24 specifies a corresponding code (random number) based on the code identification information and current date and time information in the clock processing unit 23. Then, the specified code is transmitted to the portable communication terminal 3, and is displayed on the portable communication terminal 3.

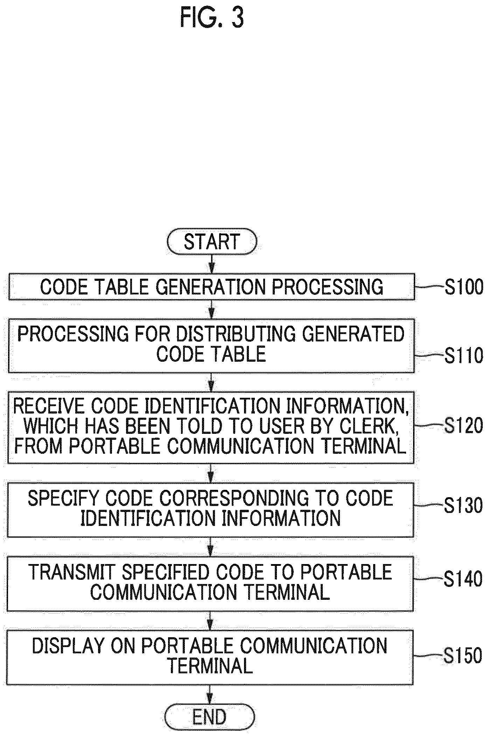

FIG. 3 is a diagram illustrating an example of the process of the authentication processing system 1. Hereinafter, a case where the facility is a restaurant will be described as an example. In the process shown in FIG. 3, in the authentication processing server 2, an arithmetic device of the authentication processing server 2 is executed based on a program stored in advance in a storage device of the authentication processing server 2. In the process shown in FIG. 3, in the portable communication terminal 3, an arithmetic device of the portable communication terminal 3 is executed based on a program stored in advance in a storage device of the portable communication terminal 3. In the process shown in FIG. 3, in the facility side terminal 4, an arithmetic device of the facility side terminal 4 is executed based on a program stored in advance in a storage device of the facility side terminal 4.

At a timing set in advance, the code table generation processing unit 20 generates a code table for use in each restaurant (S100). Then, the code table distribution processing unit 21 distributes the generated code table to the facility side terminal 4 used in each restaurant (S110). In addition, the code table generation processing unit 20 stores the generated code table in the code table storage unit 22.

When the code table is received from the authentication processing server 2, the facility side terminal 4 stores the received code table in the storage unit.

In a case where a user who visits a restaurant thinks of receiving the service, such as discount, using an application program relevant to a coupon, payment, and the like of the portable communication terminal 3, the user performs necessary procedures for payment or the like by performing the operation according to the method defined by the application program. For example, in a case where the user is willing to pay the price to the restaurant using points or electronic money, an application program therefor is started in the portable communication terminal 3.

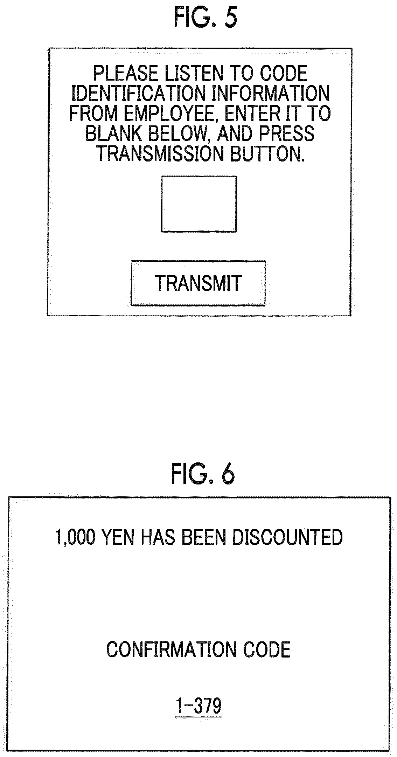

By performing a predetermined operation in the application program in the portable communication terminal 3, payment processing or the like is performed. For example, when information of the number of points (for example, 1,000 points) to be used is input, the information is transmitted to a predetermined payment server (not shown) that performs payment processing or the like. Then, when the payment processing or the like has been performed successfully, the payment server displays, for example, a code identification information input screen shown in FIG. 5 on the portable communication terminal 3.

When the user asks the clerk about code identification information, the clerk tells arbitrary code identification information in the code table displayed on the facility side terminal 4. The code identification information is information for identifying a plurality of codes in each time period. In the case of the code table shown in FIG. 4, "1", "2", and "3" correspond to the code identification information.

For example, in a case where the clerk tells "1" as code identification information, the user who has heard the code identification information enters "1" to the code identification information input screen displayed on the portable communication terminal 3, and selects transmission. When transmission is selected, a control unit of the portable communication terminal 3 transmits the code identification information input by the user to the authentication processing server 2.

The user processing unit 24 of the authentication processing server 2 receives the code identification information from the portable communication terminal 3 (S120). Then, based on the received authentication information and the current date and time information in the clock processing unit 23, the user processing unit 24 specifies a corresponding code with reference to the code table storage unit 22 (S130), and transmits the specified code to the portable communication terminal 3 (S140).

For example, in a case where "1" is received as code identification information, the current date and time information is "20:01 on November 25", and the code table shown in FIG. 4 is used, the user processing unit 24 specifies "379" as a code from the code table storage unit 22 and transmits the code to the portable communication terminal 3.

The portable communication terminal 3 displays the code transmitted from the authentication processing server 2 on the display unit, for example, as a code display screen shown in FIG. 6 (S150). At least the code identification information that the clerk has told the user and the code corresponding to the code identification information are displayed on the code display screen. When the user presents the code display screen to the clerk or when the user tells the clerk the code displayed on the code display screen, the clerk checks the time using a watch in the restaurant or the like, and checks the time and the code corresponding to the code identification information with reference to the code table displayed on the facility side terminal 4. If the code presented to the clerk by the user matches the code checked by the clerk, the clerk determines that payment processing or the like has been performed successfully, and performs accounting processing by deducting an amount that has been paid with points, electronic money, or the like by the user. On the other hand, if the code presented to the clerk by the user does not match the code checked by the clerk, the clerk determines that a possibility of a fake screen is high, and asks the user for confirmation about the payment or the like.

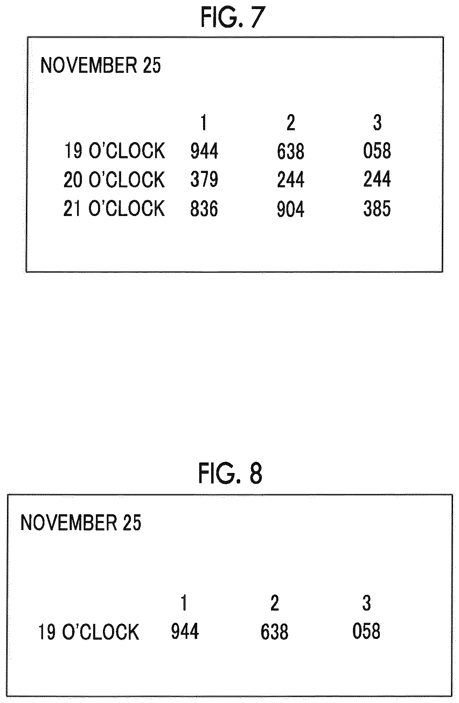

When displaying a code table on the facility side terminal 4, a code table of all time periods of the day may be displayed as shown in FIG. 4. However, it takes a long time to find a corresponding code. Therefore, using the clock function stored in the facility side terminal 4, only the code of the time period or only the codes of the time period and time periods before and after the time period may be displayed. FIG. 7 shows an example of the code table displayed on the facility side terminal 4 in this case.

By displaying not only the code of the corresponding time period but also the codes of time periods before and after the time period, processing for synchronization between the time in the clock processing unit 23 of the authentication processing server 2 and the time in the clock function of the facility side terminal 4 is not necessary.

FIG. 8 is a diagram schematically showing an example of a screen displayed on the display unit of the facility side terminal 4. In FIG. 8, in a case where date and time information in the clock processing unit 23 of the authentication processing server 2 is "20:01 on November 25" and date and time information in the clock function of the facility side terminal 4 is "19:58 on November 25", only the code of the corresponding time period is displayed. That is, only the code "944" of the time period before 20 o'clock from 19 o'clock is displayed in FIG. 8. In this case, since the code "944" that the clerk can recognize does not match the code "379" told by the user, checking work is required.

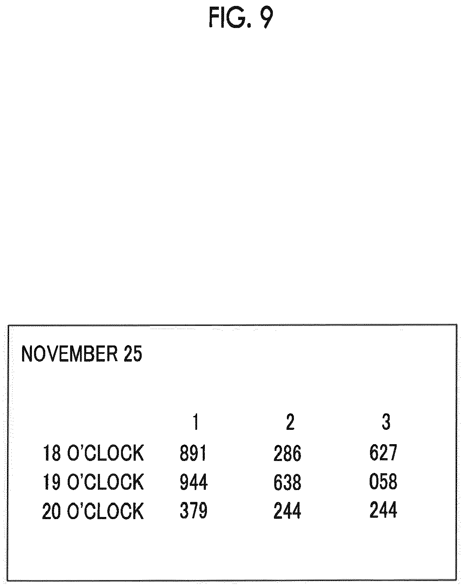

FIG. 9 is a diagram schematically showing an example of another screen displayed on the display unit of the facility side terminal 4. In FIG. 9, codes of time periods before and after the corresponding time period are also displayed. In the case of the display shown in FIG. 9, the clerk can easily recognize a match with the code of the time period before 21 o'clock from 20 o'clock. If the code told by the user matches a code of the time periods before and after the corresponding time period that are slightly shifted from the corresponding time period, it is possible to easily check the correctness of payment or the like.

In the case of changing a code table for each restaurant, the code table generation processing unit 20 generates a code table for each restaurant, and the code table distribution processing unit 21 distributes the generated code table for each restaurant to the facility side terminal 4 of each restaurant. In the code table storage unit 22, the code table is stored together with information for identifying a restaurant. In a case where the user has selected a restaurant, for which payment has to be made, when performing payment processing or the like using the application program of the portable communication terminal 3, the user processing unit 24 acquires the identification information of the restaurant from a predetermined server, which performs the payment processing or the like, when receiving the input of code identification information from the portable communication terminal 3. Based on the code identification information and the identification information of the restaurant, the user processing unit 24 specifies the corresponding code table and code with reference to the code table storage unit 22.

On the other hand, in a case where the user has not selected a restaurant, for which payment has to be made, when performing payment processing or the like using the application program of the portable communication terminal 3, the user processing unit 24 receives the identification information of the restaurant from the portable communication terminal 3 together with code identification information when receiving the input of the code identification information from the portable communication terminal 3. Based on the code identification information and the identification information of the restaurant, the user processing unit 24 specifies the corresponding code table and code with reference to the code table storage unit 22.

### [Second embodiment]

In the first embodiment, a case where the facility side terminal 4 is provided in a facility has been described. However, there is also a case where no facility side terminal 4 is provided in a facility, such as a restaurant. Therefore, the code table may be generated as a paper medium.

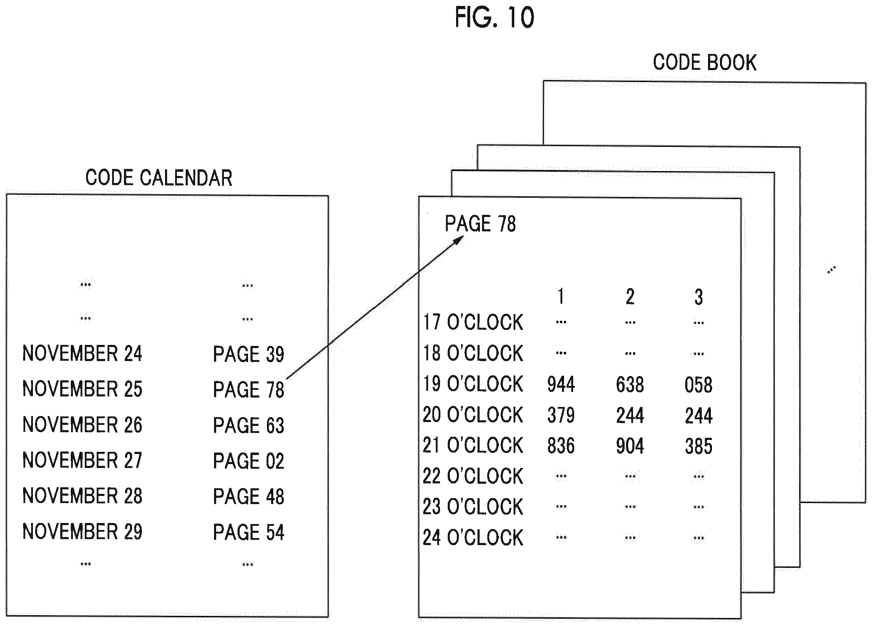

FIG. 10 is a diagram schematically showing an example of a code table on a paper medium. As shown in FIG. 10, the code table on a paper medium includes a code calendar and a code book. In the code book, for each page, a plurality of codes (random numbers) are printed for each time period. In the code calendar, it is printed what page is to be used on what month and what day.

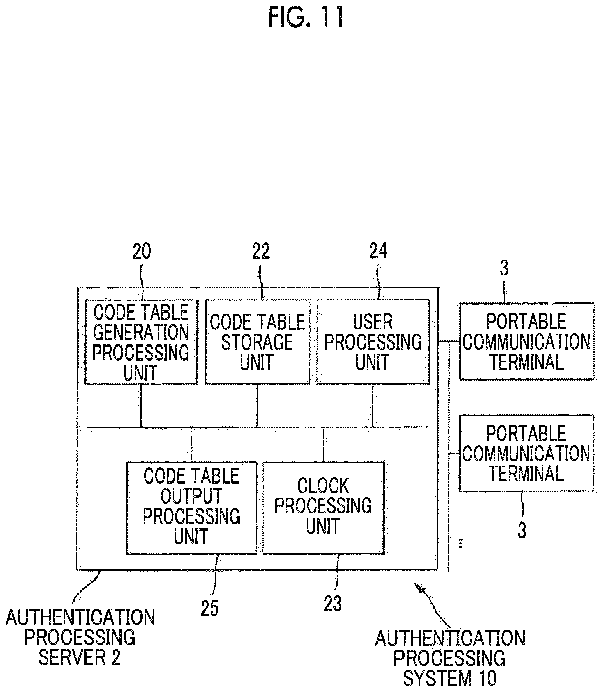

FIG. 11 is a diagram schematically showing an example of an authentication processing system 10 used in the second embodiment. The authentication processing system 10 includes a code table output processing unit 25 instead of the code table distribution processing unit 21 in the authentication processing system 1 shown in FIG. 1. In addition, the hardware configuration of a computer that realizes the authentication processing system 10 is the same as that shown in FIG. 2.

The code table output processing unit 25 performs processing for outputting the code table generated by the code table generation processing unit 20. The output processing includes various kinds of output processing, such as printing, e-mail transmission, and FAX transmission. The printed code table is sent to each facility, for example, by mail by a person in charge of a company that manages the authentication processing system 1.

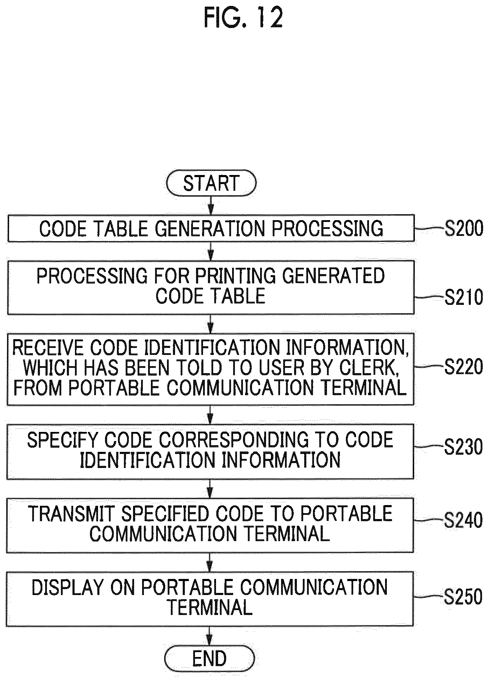

FIG. 12 is a diagram illustrating an example of the process of the authentication processing system 10. As in the first embodiment, hereinafter, a case where a facility is a restaurant will be described as an example.

At a timing set in advance, the code table generation processing unit 20 generates a code table (a code calendar and a code book) for use in each restaurant (S200). Then, the code table output processing unit 25 prints the generated code table (S210). The printed code table is sent to each restaurant, for example, by mail by a person in charge. Instead of printing the code table on a paper medium, transmission of the code table using an e-mail, transmission of the code table using a FAX, and the like may also be performed. In addition, the code table generation processing unit 20 stores the generated code table in the code table storage unit 22.

In a case where a user who visits a restaurant thinks of receiving the service, such as discount, using an application program relevant to a coupon, payment, and the like of the portable communication terminal 3, the user performs necessary procedures for payment or the like by performing the operation according to the method defined by the application program. For example, in a case where the user is willing to pay the price to the restaurant using points or electronic money, an application program therefor is started in the portable communication terminal 3.

By performing a predetermined operation in the application program in the portable communication terminal 3, payment processing or the like is performed. For example, when information of the number of points (for example, 1,000 points) to be used is input, the information is transmitted to a predetermined payment server that performs payment processing or the like. Then, when the payment processing or the like has been performed successfully, the payment server displays, for example, a code identification information input screen shown in FIG. 5 on the portable communication terminal 3.

When the user asks the clerk about code identification information, the clerk tells arbitrary code identification information in the transmitted code table. For example, in a case where the clerk tells "1", the user who has heard it enters "1" to the code identification information input screen displayed on the portable communication terminal 3, and selects transmission. When transmission is selected, a control unit of the portable communication terminal 3 transmits the code identification information input by the user to the authentication processing server 2.

The user processing unit 24 of the authentication processing server 2 receives the code identification information from the portable communication terminal 3 (S220). Then, based on the received authentication information and the current date and time information in the clock processing unit 23, the user processing unit 24 specifies a corresponding code with reference to the code table storage unit 22 (S230), and transmits the specified code to the portable communication terminal 3 (S240).

For example, in a case where "1" is received as code identification information, the current date and time information is "20:01 on November 25", and the code table shown in FIG. 4 is used, the user processing unit 24 specifies "379" as a code and transmits the code to the portable communication terminal 3.

The portable communication terminal 3 displays the code transmitted from the authentication processing server 2 on the display unit, for example, as a code display screen shown in FIG. 6 (S250). At least the code identification information that the clerk has told the user and the code corresponding to the code identification information are displayed on the code display screen. When the user presents a code to the clerk, for example, by showing the clerk the code display screen or when the user tells the clerk the code displayed on the code display screen, the clerk checks the time using a watch in the restaurant or the like. Then, the clerk opens a code book of a page, which is to be used on the day, in the code table with reference to the code calendar. Then, the clerk checks whether or not the told code is present in codes that are described for each time period in the code book.

If there is the told code, the clerk determines that payment processing or the like has been performed successfully, and performs accounting processing by deducting an amount that has been paid with points, electronic money, or the like by the user. On the other hand, if the told code is not present, the clerk determines that a possibility of a fake screen is high, and asks the user for confirmation about the payment or the like.

In the case of changing a code table for each restaurant, the code table generation processing unit 20 generates a code table for each restaurant. As a code table for each restaurant, both a page number of the code calendar and a code (random number) of the code book may be different, or only the page number of the code calendar or only the code of the code book may be different for each restaurant. Preferably, only the page number of the code calendar may be different. This is because it is easier to change the page number of the code calendar for each restaurant than to change the code of the code book for each restaurant. In the code table storage unit 22, the code table is stored together with information for identifying a restaurant. Processing in the case of receiving the input of code identification information from the portable communication terminal 3 used by the user can be performed in the same manner as in the first embodiment.

In the second embodiment, by performing the processing described above, authentication processing can be performed in the same manner as in the first embodiment even in the case of passing the code table to the restaurant side as a form of a paper medium. In a case where a facility is a restaurant, the facility side terminal 4, such as a computer, may not be provided in the restaurant. Therefore, it is effective to perform the processing shown in the second embodiment.

The first and second embodiments may be combined so that the authentication processing server includes both the code table distribution processing unit and the code table output processing unit. By using the authentication processing server, it is possible to provide an electronic code table to restaurants where the facility side terminal 4 is used and to provide a code table on a paper medium to restaurants where the facility side terminal 4 is not used.

A computer program causing a computer to realize each of the functions that the authentication processing systems 1 and 10 have may be provided in a form recorded in a computer-readable recording medium, such as a magnetic recording medium or an optical recording medium. An application program executed in the portable communication terminal 3 may be provided by being downloaded to the portable communication terminal 3 from a server, such as the authentication processing server 2.

By using the authentication processing systems 1 and 10 of the invention, it is possible to reduce the burden on a clerk and to easily determine whether or not the screen is a fake screen.

It should be understood that those skilled in the art can apply various changes, replacement, and modifications to the above without departing from the spirit and scope of the invention and the embodiments may be appropriately combined.

### Reference Signs List

- 1, 10:: authentication processing system

- 2:: authentication processing server
- 3:: portable communication terminal
- 4:: facility side terminal
- 20:: code table generation processing unit
- 21:: code table distribution processing unit
- 22:: code table storage unit
- 23:: clock processing unit
- 24:: user processing unit
- 25:: code table output processing unit
- 70:: arithmetic device
- 71:: storage device
- 72:: display device
- 73:: input device
- 74:: communication device

## Claims

1. An authentication processing system (1, 10) for authenticating a screen presented to an employee of a facility by a user of the facility, comprising:
an authentication processing server (2); and
a portable communication terminal (3) that is used by a user of a facility,
wherein the authentication processing server (2) includes:
a code table generation processing unit (20) that generates a code table including a plurality of first codes and a second code, which is associated with each of the plurality of first codes for each time period;
a code table storage unit (22) that stores the code table generated by the code table generation processing unit (20);
a clock processing unit (23) having a clock function; and
a user processing unit (24) that receives the first code from the portable communication terminal (3), specifies the second code corresponding to the received first code from the code table stored in the code table storage unit (22) based on date and time information in the clock processing unit (23), and transmits the specified second code to the portable communication terminal (3), and
the portable communication terminal (3) includes a display unit that displays a screen, which is to be presented to the employee of the facility, based on the second code received from the authentication processing server (2).

2. The authentication processing system according to claim 1,
wherein the portable communication terminal further includes an input unit for inputting the first code.

3. The authentication processing system according to claim 1 or 2,
wherein the authentication processing server further includes a code table distribution processing unit that distributes the code table to a facility side terminal provided in the facility.

4. The authentication processing system according to claim 3, further comprising:
a facility side terminal provided in a facility,
wherein the facility side terminal includes:
a facility side storage unit that stores the code table distributed from the authentication processing server;
a facility side clock processing unit having a clock function; and
a display unit that specifies, from the code table stored in the facility side storage unit, the second code of a predetermined time period based on date and time information in the facility side clock processing unit and displays the specified second code.

5. The authentication processing system according to claim 4,
wherein the predetermined time period includes a current time period and time periods before and after the current time period.

6. The authentication processing system according to any one of claims 1 to 5,
wherein the authentication processing server further includes a code table output processing unit that outputs the code table as a paper medium.

7. The authentication processing system according to claim 6,
wherein the code table output processing unit outputs the code table as a code calendar and a code book of a paper medium,
in the code calendar, a date and a page number are associated with each other, and
in the code book, a time period and the second code are associated with each other for each page.

8. The authentication processing system according to claim 7,
wherein, in the code calendar, association between the date and the page number is different for each facility.

9. The authentication processing system according to claim 7 or 8,
wherein, in the code book, association between the time period and the second code is different for each facility.

10. The authentication processing system according to any one of claims 1 to 9,
wherein the code table generation processing unit generates the code table such that the second code is changed for each facility.

11. The authentication processing system according to any one of claims 1 to 10,
wherein the code table generation processing unit generates the code table such that the second code is changed every predetermined period.

12. The authentication processing system according to claim 11,
wherein the predetermined period is month, week, day, or time.

13. An authentication processing server for authenticating a screen presented to an employee of a facility by a user of the facility, comprising:
a code table generation processing unit that generates a code table including a plurality of first codes and a second code, which is associated with each of the plurality of first codes for each predetermined time period;
a code table storage unit that stores the code table generated by the code table generation processing unit;
a clock processing unit having a clock function; and
a user processing unit that receives a first code from a portable communication terminal used by the user, specifies a second code corresponding to the received first code from the code table stored in the code table storage unit based on date and time information in the clock processing unit, and transmits the specified second code to the portable communication terminal.

14. The authentication processing server according to claim 13, further comprising:
a code table distribution processing unit that distributes the code table to a facility side terminal provided in the facility.

15. The authentication processing server according to claim 13 or 14, further comprising:
a code table output processing unit that outputs the code table as a paper medium.

16. The authentication processing server according to claim 15,
wherein the code table output processing unit outputs the code table as a code calendar and a code book of a paper medium,
in the code calendar, a date and a page number are associated with each other, and in the code book, a time period and the second code are associated with each other for each page.

17. The authentication processing server according to claim 16,
wherein, in the code calendar, association between the date and the page number is different for each facility.

18. The authentication processing server according to claim 16 or 17,
wherein, in the code book, association between the time period and the second code is different for each facility.

19. The authentication processing server according to any one of claims 13 to 18,
wherein the code table generation processing unit generates the code table such that the second code is changed for each facility.

20. The authentication processing server according to any one of claims 13 to 19,
wherein the code table generation processing unit generates the code table such that the second code is changed every predetermined period.

21. The authentication processing server according to claim 20,
wherein the predetermined period is month, week, day, or time.
